# EUROPEAN PATENT APPLICATION

(11) **EP 2 731 079 A2**
(43) Date of publication of application: **14.05.2014**
(21) Application number: 13191924.3
(22) Date of filing: 07.11.2013
(51) Int. Cl.: G06T 15/00

(54) **Method for automatic generation of drawing operations from graphic assets**

(30) Priority: 09.11.2012 NO 20121321
(71) Applicant: Outracks Technologies AS, 7012 Trondheim (NO)
(72) Inventor: Lassen, Anders Knive, 7012 Trondheim (NO); Fornes, Morten Daniel Nøstvold, 7712 Steinkjer (NO); Gravås, Lorents Odin, 7711 Steinkjer (NO)
(74) Representative: Onsagers AS

(57) **Abstract**

A method for automatically generating a drawing operation on any graphic subsystem based on graphic assets defined independently of each other. The method comprises establishing expression graphs based on queried parameters needed for the drawing operation and splitting the expression graphs into isolated sections of expression graphs at the border of execution stages and converting each isolated expression graph into conventional code.

## Description

### Introduction

The present invention relates to method for automatic generation of drawing operation for a graphics subsystem based on a set of graphic assets.

### Background

The field of computer graphics comprises theory, methods and techniques for transforming a set of graphic assets into visual images. Graphic assets may exist in a variety of formats, such as:
- geometric shapes defined by mathematical functions, vertices, edges, or polygons,
- attributes defined in relation to the geometric shapes that describe the intended appearance and behavior of the shape in response to environmental properties, such as functions that describe how the shape interacts with various physical or optical phenomena,
- texture images that are mapped onto geometric shapes to provide a fine granularity of sample points for such attributes across the shape,
- data that describes animation of geometric shapes and its attributes over time, or in response to input or environmental triggers, or
- computer programs that describes how data used to describe the visual appearance or behavior of a graphic asset should be calculated.

A graphics subsystem is an apparatus that given a set of data, programs and parameters to a set of drawing operations can render a visual image in a desired output media. A computer graphics subsystem is often implemented by a Graphics Processing Unit (GPU) and a software driver exposing a graphics Application Programming Interface (API) that defines the set of drawing operations and their input parameters, such as OpenGL or Direct3D. Another example implementation of a graphics subsystem may be a printer hardware device, a software driver exposing a graphics API set of possible drawing operations and their input parameters for the printer.

A common technical challenge in the field of computer graphics is to convert graphic assets in various formats into efficient drawing operations for a given graphics subsystem. Prior methods and techniques comprise transforming graphic assets between different data representations, and then applying manual engineering to develop a domain-specific software application that takes graphic assets in an appropriate data representation and converts this into drawing operations for a graphics sub system in a fixed manner appropriate for the application domain. This process is often expensive and requires specialist competence.

Parameters to drawing operations in computer graphics subsystems are often more than a set of static hard values or data sets. They may also involve special programs that configure particular execution stages within the graphics subsystem, such as fragment and vertex shaders in the OpenGL graphics subsystem. These programs in turn can be configured by passing in additional parameters specific to the program.

Graphics assets may be incomplete and must be combined with other assets to produce a meaningful and complete set of inputs to a graphics subsystem. For example, a graphic asset describing 3D mesh of vertices and triangles need to be combined with a set of shader programs as well as other parameters in order to be converted to a visual image by an OpenGL ES 2.0 graphics subsystem. The shader programs, commands and parameters to the OpenGL ES 2.0 graphics subsystem must be written to match the data formats and available attributes in the graphic asset to produce the desired output. In many cases it is not desirable to write one shader program for each graphic asset, because this process involves manual engineering. Prior methods and techniques that address problem includes writing special programs that can handle a set of combinations of inputs, and configure and pre-process this program before compilation or at run time based on properties of the graphic asset being rendered.

Often it is desirable to express graphic asset attributes in terms of programmed functions or expression graphs that calculate the attribute based on environmental inputs, for example describing the material of an object by a function that calculates the amount of light it reflects given certain view and lighting vectors. This is typically expressed in the form of shader code, or in data formats that allow expression graphs to be assigned to attributes. This raises multiple challenges when it is desired to combine multiple graphic assets into a single draw operation, for example if it is desired to combine the function above with another function that calculates the amount of light reflected onto the object by the environment. Most graphics subsystems can only handle a single shader program for each programmable execution stage of the graphics pipeline. When multiple programs or additional expression graphs are present, combining these assets to form a single shader program for each programmable execution stage is not trivial and often requires specialist engineering. Several prior techniques and methods exist that addresses the problem, most involving putting restrictions on the form in which such graphic assets can be represented so that a method can combine them together into a shader program that is predictably valid.

Further, when multiple graphics assets are combined, the resulting combined programs for each programmable execution are not necessarily optimal; there might be redundant operations in the resulting programs when graphic assets are combined. For example, an operation programmed to execute in a parallel execution stage, such as the vertex shader in the OpenGL subsystem, may end up with inputs that are constant for all processed entities. Performance of the subsystem is likely to improve if the operation is moved to an execution stage that executes less frequently, preferably on the CPU ahead of initiating the drawing operation. This change is however not trivial to perform as it tends to require changes in several parts of the software application. This problem is partly addressed by prior methods by constructing a combined expression graph from all provided shader code for all execution stages in the graphics subsystem, analyzing and modifying the expression graph to move redundant operations to the most optimal execution stage while preserving the correct behavior of the system, and then transforming the resulting expression graph back to shader code. This is currently often done by the software drivers of the graphics subsystems.

The present invention offers improvements over the prior art by introducing a new representation for graphic assets and a method that automatically converts graphic assets in said representation into drawing operations for a suitable graphics subsystem. The invention also introduces a new method for combining such assets in such a way that graphic assets defined independently of each other can automatically produce complete and meaningful drawing operations, which in turn is likely to produce a satisfactory visual image output. The present invention allows graphic assets representation to capture information about the desired appearance and behavior of the asset without associating the information to a particular execution stage, programming language, graphics API or particular graphic subsystem characteristic. Hence graphic assets represented using the present invention's representation will have improved reusability across graphics subsystems and be easy to combine with other graphic assets with reduced need for manual engineering.

### Short description

The present invention comprises a method for automatically generating a drawing operation on any graphic subsystem based on graphic assets defined independently of each other. The method is defined by:
- identifying all parameters needed by said drawing operation;
- establishing an ordered list of graphic properties from said graphic assets;
- querying said ordered list of graphic properties for each parameter needed by said drawing operation;
- establishing expression graphs based on the results of said querying;
- splitting the resulting expression graphs into isolated sections of expression graphs at the borders of different execution stages, and
- converting each isolated expression graph into conventional code in a programming language appropriate for each execution stage.

Further features of the invention are defined in the enclosed dependent claims.

The invention is also described by a computer program product that when loaded and executed on a processing device comprises instruction for performing the method defined in the claims.

### Detailed description

The present invention will now be described in detail with reference to the drawings where:
- Figure 1: shows how a graphic asset is comprised of an ordered list of properties, where each property has a name and a list of definitions in order of priority.
- Figure 2: shows an example graphic asset describing the geometry of a triangle by providing a property called "Vertices" and an array of 2D-points as its only definition.
- Figure 3: shows an example graphic asset describing how OpenGL specific draw operation parameters can be extracted from more abstract properties to achieve a specific visual effect.
- Figure 4: shows how two example graphic assets can be combined into a new asset by concatenating the lists of properties into a new list of properties.
- Figure 5: shows an example sequence of examinations and operations performed during a on a graphic asset for a property with a certain name.
- Figure 6: shows an example of a resulting expression graph for an OpenGL graphics subsystem after querying a graphic asset for the parameters "gl_FragColor" and "gl_Position".
- Figure 7: shows a modified version of Figure 6, where the expression graph has been split into two isolated graphs for the vertex and fragment execution stages, and a special node "varying_interpolation" has been inserted at the border between the execution stages.

The purpose of the present invention is to automatically generate drawing operations on any graphic subsystem based on graphic assets defined independently of each other. According to the invention, the way of representing assets allows to handle incomplete assets through a combination of fall backs and default values for properties.

For example, the invention may be used to generate a real-time interactive rendering of a 3D model provided in a COLLADA file format, by generating a program that issues drawing operations to an OpenGL ES 2.0 graphics subsystem and shader programs for the different execution stages of the subsystem.

Extending the example, the data from the COLLADA file can be combined with assets defined separately that define a set of mappings between COLLADA properties and the desired lighting model, and assets that define common view and projection transformations. If the COLLADA data does not contain all properties required to calculate all parameters to a drawing operation, other assets in the combination may define default values or fall back definitions for properties that do not require these values to be present to produce a meaningful result. This removes the need for manual specialist engineering to resolve such issues.

As a second example, the invention may be used to combine multiple formulas for calculating independent components of a lighting model into a common set of shader programs, with 3D models defined as mathematical functions, and then issuing drawing operations to a non-real-time ray-tracing based graphics subsystem for cinematic images based on the combination of assets.

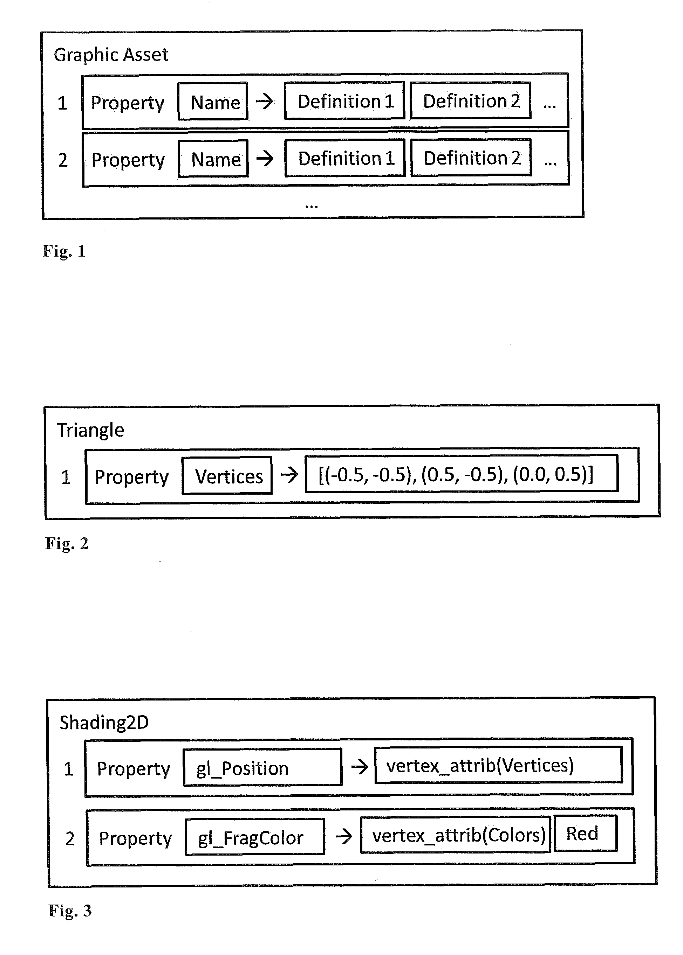

Figure 1 shows the structure of a graphic asset. A graphic asset comprises an ordered list of properties. Each property has a name that identifies the semantic meaning of the property. The name is not necessarily unique within the asset as there may be multiple properties with the same semantic name. In addition to a name, each property has an ordered list of zero or more definitions, defined in order of priority. Each definition comprises an expression graph of operators (nodes) and edges that expresses one way the value of the property can be computed.

The method according to the present invention is applied by first identifying all parameters needed by the type of drawing operation one seeks to generate. Said set of parameters will be referred to as the set of terminal properties. The set of terminal properties may vary significantly between different types of graphics subsystems and implementation of the present invention.

For example, in one implementation of the present invention for the OpenGL ES 2.0 graphics subsystem, one could choose to include the following parameters in the set of terminal properties:
- the standard output values from the vertex and fragment shader stages ("gl_Position" and "gl_FragColor", respectively)
- most render states in the OpenGL ES 2.0 state machine (e.g. whether blending is enabled, what blend function to use, what line width to use)

Each property in the set of terminal properties should be assigned a name that can be used by graphic assets to assign values to the underlying parameters in the draw operation.

Note that the properties in the terminal set are not necessarily possible to reduce to hard values up front, because they only make sense in certain execution stages, such as within a vertex or fragment shader. Properties in the terminal set may only be expressible as expression graphs, or program code, and can only be evaluated to hard values in a run time context.

After the set of parameters to the drawing operation has been identified, an ordered list of graphic properties is established. In the simplest case, this is be done by taking the ordered list of graphic properties from a single graphic asset.

Further, for each parameter to the drawing operation, a query is performed on said ordered list of graphic properties to resolve a valid definition for the name of the parameter. A query is generally performed as follows:
1. Starting with the last property in the ordered list of graphic properties, compare the name of the property with the graphic asset with the name being queried and continue backwards in the list until a match is found. If no match is found, the query fails. A failing query generally means that there is not enough information in the asset(s) to generate a meaningful drawing operation.
2. When a match is found, examine the definitions of the matched property in order of priority and return the first valid definition. If no match is found, the query fails. Determining the criteria for whether a definition is valid is left to the implementation. For example, a criterion for validity can be whether the expression graph of a definition contains operators that that are not available on the target graphics subsystem.

If all queries succeed, the result can be viewed a set of root nodes of potentially intertwining expression graphs. Every property in the terminal property set will be associated to exactly one root node in said graphs.

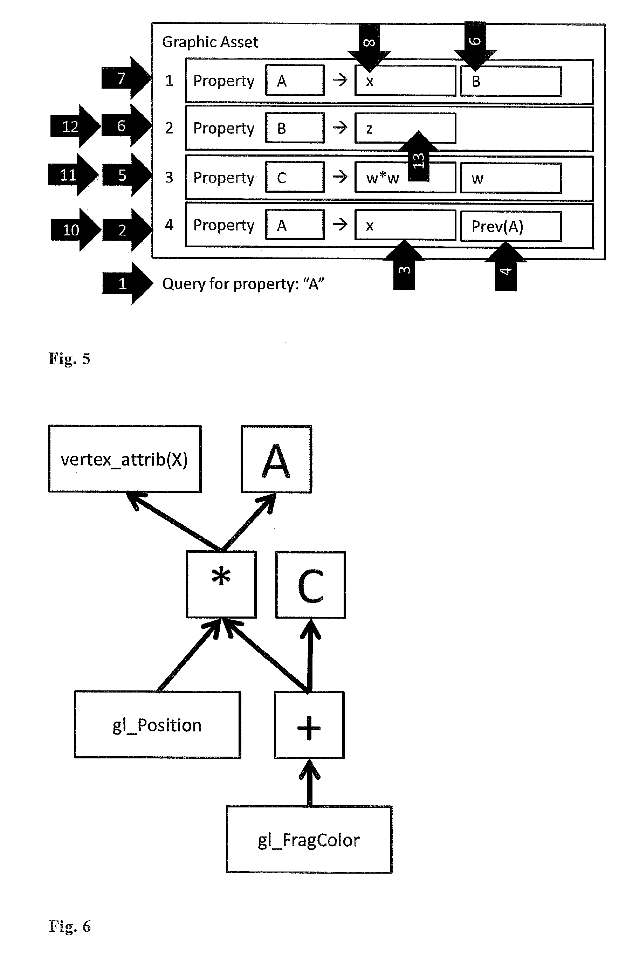

Figure 6 shows an example of such intertwined expression graphs resulting from querying "gl_FragColor" and "gl_Position", which are properties in a terminal set.

The next step is to traverse the intertwined expression graphs to split them into isolated sub graphs for each execution stage in the graphics subsystem. Exactly how said splitting is performed depends on implementation, and is largely defined by the nature of and relationship between the execution stages of the graphics subsystem. The implementation of this invention may very well introduce additional artificial execution stages, for example execution stages that comprise code that execute every visual frame, every so often in units of time or in response to external interrupts.

For the splitting algorithm to be trivial, execution stages of the implementation need to have a defined order, from "first" to "last". How the order should be defined is dependent on graphics subsystem and implementation details. However, as a guide line, execution stage "A" precedes execution stage "B" if operators in stage "B" can read values from stage "A" as if they are constant during the relevant lapse of execution of code in stage "B". For example, the vertex shader stage in OpenGL ES 2.0 graphic subsystems precedes the fragment shader stage because the fragment shader stage can read values from the vertex shader stage as interpolated varying constants. Similarly, a per visual frame execution stage precedes the vertex shader stage in OpenGL ES 2.0 graphic subsystems because vertex shaders can read values from the CPU through uniforms. If the execution stages does not have a well-defined order, then implementation specific rules must determine the criteria and method for said splitting of the expression graph into isolated sub graphs for each execution stage.

As an example of how such an expression graph splitting method can behave, it is natural to start with a terminal property of the "last" execution stage, such as the outputs of the fragment shader stage in the OpenGL ES 2.0 graphics subsystem. We then traverse the expression graph, coloring operators that are required to execute on a particular stage (or "later") as such. For an operator that is not bound to a particular stage, we recursively assign the "last" execution stage of its input nodes are used as execution stage for said operator.

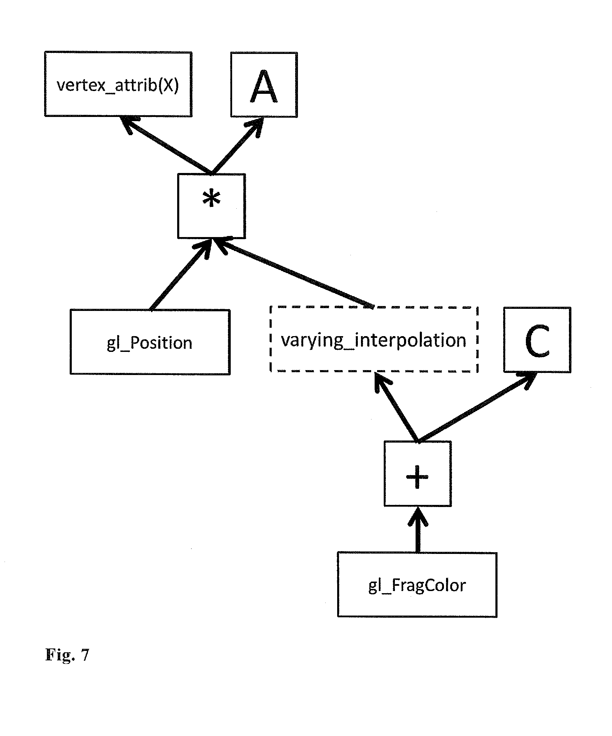

Figure 7, seen in relation to Figure 6, illustrates how an expression graph can be split. In this example, a "varying_interpolation" node is inserted at the edge separating the fragment shader execution stage from the vertex shader execution stage. Such edge nodes will exist in both sub graphs and maps to the mechanism in the subsystem that passes values from one stage to the other.

When the expression graphs have been split into isolated sub graphs for each execution stage, the resulting graphs can be converted into conventional program code, either by generating machine code directly, or emitting source code in a conventional programming language. This is considered to be trivial and is covered by prior art methods.

The essence of the present invention comprises an apparatus or computer program that implements the method as discussed up to this point. We will now elaborate on extensions to this method that further improves the technical function and application of the present invention.

Returning to Figure 1, we recall that a graphic asset comprises an ordered list of properties. We extend the invention by introducing a method for combining graphic assets defined independently of each other into a new graphic asset by concatenating their respective lists of graphics properties.

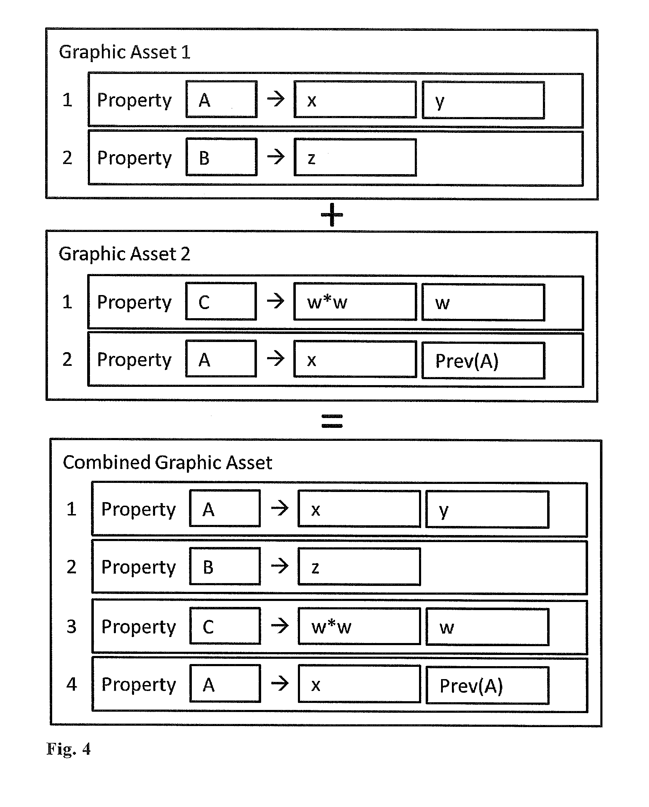

Figure 4 shows how two assets defined independently of each other are combined by concatenating the respective lists of properties.

The rationale behind the method for combining assets is the assumption that that the list is ordered so that the first listed property is the most general and the succeeding properties are more specific. When multiple graphics assets are combined, the assets should be ordered in the same manner. The most general asset should be sequenced first, and assets of decreasing generality and increasing specialization should follow, so that when the property lists are concatenated, the assumption of the properties being ordered by generality holds to a largest possible extent also for the resulting concatenated list. Defining what is more general in this context and the order of concatenation is at the discretion of the implementation and end user.

As an example, if combining the assets illustrated in Figure 2 and 3, it would be preferable to sequence them in the order [Shading2D, Triangle], as the Shading2D asset holds general relationships between terminal properties and abstract properties that are assumed to be useful for multiple assets, while a triangle could be considered a more specific asset by comparison.

One would typically combine a number of graphic assets into a larger graphic asset before establishing the final ordered list of graphic properties from which to generate a drawing operation. The set of graphics assets to combine should be chosen based on the combination of the geometric objects one wish to visualize, the visual effects one wishes to apply to the object, the environmental factors that should affect the object, the graphics subsystem one is targeting, and several other considerations, such as real-time rendering performance.

As an implementation guideline, specific graphic assets should preferably not define properties that assign values directly to graphics subsystem-specific terminal properties. Instead, specific graphic assets should define properties that assign values to more general semantic properties, and separate graphic assets general to a graphics subsystem should define properties that map general semantic properties back to graphics subsystem specific terminal properties.

The above implementation guideline is exemplified by the relationship between Figure 2 and Figure 3.

Figure 2 shows the graphic asset "Triangle", that instead of defining precisely how the terminal property "gl_Position" is computed only provides the more general property "Vertices", that other assets can use to compute other useful values when in combination with the Triangle asset.

Figure 3 shows a separate graphic asset that define the terminal properties "gl_Position" and "gl_FragColor" can be computed, provided the existence of more general properties such as "Vertices" or "Colors".

The invention is further extended to cover methods in which special programming language constructs or data structures are introduced for implicitly defining the order in which to combine graphic assets by the relationships of said language constructs or data structures to other language constructs or data structures.

As an example, an object-oriented programming language compiler that implements this invention can define that fields and properties of a class or data structure declaration implicitly act as graphics properties under the application of this invention, and the class or data structure itself can thus be viewed as a graphic asset.

Extending the example, an object-oriented programming language compiler that implements this invention can define that if class "B" inherits another class "A", and "A" and "B" are viewed as graphic assets, then the list of graphic properties associated with class "A" will be concatenated into the list of graphic properties associated with class "B" in the order [A, B] under application of this method. As base classes are considered more general than subclasses, this is consistent with the implementation guide line that more general graphics properties should precede more specific graphics properties.

Further extending the example, a shading language compiler or processor can define that vertex attributes, uniforms, varyings and global variables are implicitly viewed as graphics properties under the application of this invention, and thus the shader as a whole can be viewed as a graphics asset.

Further extending the example, a programming language can introduce special language constructs or data structures to define a hierarchy or graphs of blocks of graphic properties, including special blocks that represent "drawable" assets as well as "non-drawable" assets. A "non-drawable" asset can for example be a node in a hierarchy of animated joints with no actual visual representation except an indirect or conditional influence on the visual representation of other assets. Another example of a "non-drawable" asset is a light source with no visual representation except the light it casts on other objects. In addition, special blocks can be introduced that will be converted to actual subroutines that will contain the drawing operations generated by applying this invention's method on all "drawable" graphic assets in a given scope or path, in combination with all other graphic assets in an ordered list defined by traversing the hierarchy or graph using a given arbitrary method.

Further extending the example, a computer program that can read and interpret data from conventional computer graphics asset formats, such as COLLADA or CAD files, can define a mapping from said asset formats into graphics properties, under the application of this invention, and the data in such formats can thus be viewed as graphics assets. In addition, said computer programs can define mappings from such formats into special language constructs or data structures that comprise hierarchies or graphs of blocks of graphics properties, as described above.

Further extending the example, a programming language, content authoring tool, computer program or other another apparatus implementing this invention can allow special language constructs or data structures to be manipulated either as text, raw data or reflected in user interface controls, to allow a user or agent to define the combination order of any of said graphics asset types, as well the traversing order of hierarchies and graphs of blocks of graphic properties, to produce new graphics assets or drawing operations.

Returning to Figure 1, we recall that a graphics property in its simplest form have exactly one definition. We will now discuss how a graphics property can be extended to have multiple definitions in a defined order of priority.

This extension allows properties to be defined with fallbacks to better handle incomplete data sets in combined assets, and generally increase the robustness of the method and reduce the chance of queries failing. The definitions of a property is typically ordered by priority, so that the first definition contains an expression graph denoting the most desirable way of computing the value of the property, while succeeding definitions represent less desirable, yet acceptable ways of computing the value of the property.

In Figure 3, the property "gl_FragColor" contains two definitions with a defined order of priority from left to right. As a first priority, "gl_FragColor" is defined to apply the "vertex_atrib" operator to a property with name "Vertices". However, if this determined to be invalid by the implementation, the hard value "Red" is provided as a fall back definition for the property.

The above extension has consequences for the method used for executing queries on graphic assets. The previously described method where a query is performed by examining the list of graphics properties starting with the last listed graphics property and continuing in reverse order until the first matched graphics property is found, is now extended by then examining the definitions of the matched graphic property in order of priority and returning the first valid definition.

The above method is further extended to cover methods where the validity of a definition is determined by evaluating a given set of predicates for each definition. In this context, predicates are understood as functions or expression graphs that evaluate to a Boolean value (true or false), denoting whether the definition is valid or not. The predicates may be associated to property definitions as part of the graphic asset data structure. Predicate expression graphs may, in a manner similar to the definitions themselves, have nodes that refer to other graphic properties and invoke recursive queries on the list of graphic properties to compute said Boolean value. The invention is also extended to cover methods that if a predicate cannot be evaluated to a hard value during the application of the invention, program code is emitted that evaluate the predicate at a later point in time, and a branch to code to handle both paths at runtime (where the definition either is valid or invalid) is generated.

The invention is further extended to cover methods, where if the definition returned by a query of a graphic property name contains a reference to another graphic property, then a new query is performed recursively for the referenced graphic property.

Figure 5 illustrate an example execution of a query using multiple definitions as fallbacks, as well as properties that contain references to other graphics properties invoking recursive queries.

The following elaboration explains the numbered arrows in the figure sequentially. We start by (1) specifying the name of the property being queried for, in this case "A". (2) We examine the last property in the list, in this case property 4 with the name "A". As this is a match with the property being queried, we (3) examine the first definition of the property. If "x" is a valid definition, then "x" is the final result of the query. Assuming "x" is not a valid definition, we continue to (4) examine the second priority definition of the matched property. This contains the expression "Prev(A)", as an example of how an definition can recursively invoke queries. "Prev" is here assumed to be an operator that refers to a previous definition of the property name provided as argument. This is resolved by invoking a special type of query which instead of starting from the last listed graphic property, starts at the graphic property preceding the currently matched property. This means (5) examine the third property in the list, this time looking for a match with the property name "A" taken from the argument of the operator "Prev". We continue backwards through (6) property 2 and, we finally (7) find match the name "A" with property 1. We examine its definitions in order of priority, starting with (8) "x", which is still assumed to be invalid. We continue to (9) which is a reference to a property with name "B". This is a regular property reference which invokes a new query starting from the (10) last listed graphic property, continuing backwards through (11) property 3, and finally matching with (12) property 2. We examine the matched property's definitions in order of priority. Assuming (13) "z" is a valid definition, "z" is returned as the final result of the query.

As already reflected by the discussion up to this point, the invention can handle scenarios where the resulting expression graphs from querying a list of graphic assets for draw operation parameters contains operators that are linked to specific execution stages.

Such operators are for example sampling textures in a OpenGL ES 2.0 graphics subsystem, which is in some implementations possible in fragment shader, as well as on the CPU, but not in the vertex shader.

One possible method to address this is already presented, where such a node would be colored as having to execute in a particular stage and a recursive coloring function would force nodes depending on the output of that node to execute in the same stage or "later".

We will outline an outline alternative method to address a more complex scenario, as an example of a class of methods that can extend this invention.

If for example an operator is required to be executed on the vertex stage, but the graphics subsystem does not allow that operator in the GPU vertex shader, one can create an artificial vertex processing stage executing on the CPU in addition to the GPU vertex shader, and apply a transformation on the expression graphs that moves such an operator to said artificial execution stage, and correspondingly moves the edge operators feeding the resulting vertex streams into the GPU vertex shader. This effectively produces a program with partial fall back to CPU vertex processing.

The inventive method can be performed by computer program comprising instructions for performing the described inventive method when the computer program is loaded and executed on a processing device.

For a person skilled in the art it will be obvious that the inventive method described with reference to drawing operations on any graphics API may also be described more generally. It may for instance be implemented as an extension to any suitable existing programming language and compiler.

## Claims

1. A method for automatically generating a drawing operation on any graphic subsystem based on graphic assets defined independently of each other, **characterized by**:
a. identifying all parameters needed by said drawing operations;
b. establishing an ordered list of graphic properties from said graphic assets;
c. querying said ordered list of graphic properties for each parameter needed by said drawing operation;
d. establishing expression graphs based on the results of said querying;
e. splitting the resulting expression graphs into isolated sections of expression graphs at the borders of different execution stages, and
f. converting each isolated expression graph into conventional code in a programming language appropriate for each execution stage.

2. A method according to claim 1, where the ordered list is established by combining graphic assets defined independently of each other into a new graphic asset by concatenating their respective lists of properties.

3. A method according to claim 2, where the order of the combined graphic assets is defined by special programming language constructs or data structures and their relationships.

4. A method according to claim 1, where one or more graphic properties are extended to have multiple definitions in a defined order of priority.

5. A method according to claim 1 or 4, where the query is performed by examining the list of graphics properties starting with the last listed graphics property and continuing in reverse order until the first matched graphics property is found, and then examining the definitions of the matched graphic property in order of priority and returning the first valid definition.

6. A method according to claim 5, where the validity of a definition is determined by evaluating a given set of predicates for each definition.

7. A method according to claim 5, where if the result of the query of a graphic property contains a reference to another graphic property, then a new query according to claim 5 is performed recursively for the referenced graphic property.

8. A computer program that when loaded and executed on a processing device comprises instruction for performing the method according to one or more of the method steps 1 - 7.
